# EUROPÄISCHE PATENTANMELDUNG

(11) **EP 2 060 979 A1**
(43) Veröffentlichungstag der Anmeldung: **20.05.2009**
(21) Anmeldenummer: 08405279.4
(22) Anmeldetag: 12.11.2008
(51) Int. Cl.: G06F 15/173, G06F 13/40

(54) **Paralleles Computersystem, Verfahren zum parallelen Verarbeiten von Daten**

(30) Priorität: 12.11.2007 CH 17432007
(71) Anmelder: Supercomputing Systems AG, 8005 Zürich (CH)
(72) Erfinder: Gunzinger, Anton, 8008 Zürich (CH); Gysi, Tobias, 8051 Zürich (CH); Herrli, Markus, 3012 Bern (CH); Leone, Leonardo, 8134 Adliswil (CH); Moser, Stephan, 8400 Winterthur (CH); Mueller, David, 8340 Hinwil (CH)
(74) Vertreter: Frei Patent Attorneys

(57) **Zusammenfassung**

Die Erfindung betrifft Mehrcomputersysteme, wobei jeder Computer (100, 200, ..., N00) einen Zentralprozessor (101, 201, ..., N01) und einen Arbeitsspeicher (103, 203, ..., N03) aufweist. Gemäss einem Ansatz der Erfindung wird der "Internal High Speed Interconnect" (104, 204, ...N04) über die internen Grenzen des Computers hinaus, bis in den "High Speed Switch" (1) hinein verlängert. Im High Speed Switch erfolgt allenfalls noch eine einmalige Umwandlung am "High Speed Interconnect Interface" (109, 209, ...N09) um dann bspw. analog zum Stand der Technik die Daten über die "Switching Matrix" zu übertragen

## Beschreibung

Die vorliegende Erfindung bezieht sich auf das Verfahren zum parallelen Verarbeiten von Daten und zum Betreiben eines parallelen Computersystems sowie ein paralleles Computersystem.

Anspruchsvolle Computeranwendungen wie z.B. die Simulation von technischen Systemen, Internetserver, Audio- und Videoserver ("Video on Demand"), Datenbanken, benötigen immer mehr Rechenleistung. Diese Rechenleistung kann heute kostengünstig durch den Einsatz von parallel geschalteten Computersystemen erbracht werden.

In den parallel geschalteten Computersystemen ist die gesamte Systemleistung sehr stark vom eingesetzten Kommunikationssystem abhängig. Die entscheidenden Faktoren eines Kornmunikationssystems sind Brandbreite (Datenmenge, die pro Zeiteinheit transportiert wird) und Latenzzeit (Zeitdifferenz vom Aufruf der Kommunikationsfunktion auf dem Sendprozessor bis zur Ankunft in der Anwendung auf dem Empfängerprozessor).

Es ist deshalb verständlich, dass ein hoher technischer Aufwand betrieben wird, um hohe Bandbreite und tiefe Latenz zu erhalten.

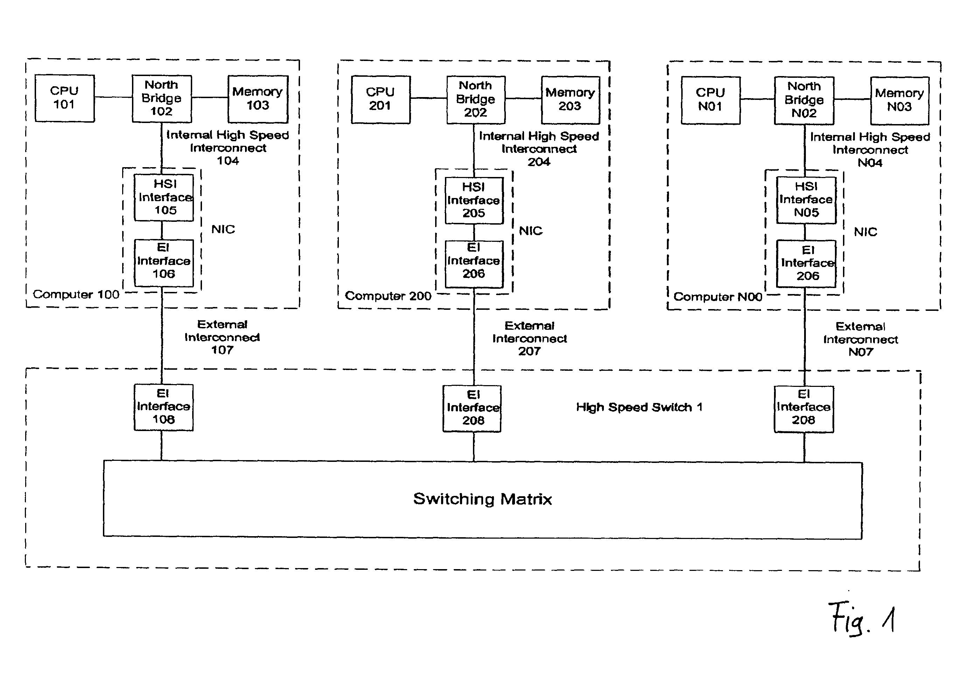

Ein paralleles Computersystem nach dem Stand der Technik besteht nach Figur 1 aus mehreren Computern (100, 200, ....N00), die über einen "High Speed Switch" (1) miteinander verbunden sind. Ein einzelner Computer (100, 200, ...N00) setzt sich aus der "Central Processing Unit" (101, 201, ...N01), dem "Memory" (103, 203, ...N03) sowie einem Verbindungsbaustein ("North Bridge") (102, 202, ...N02) zusammen. Weitere Teile eines Computers wie der Zugriff auf Eingabe/Ausgabe - Einheiten, Harddisk, CD, Stromversorgung etc. sind hier aus Übersichtlichkeitsgründen weggelassen, da die Elemente für die Beschreibung der parallelen Arbeitsweise nicht wesentlich sind.

Will nun ein Computersystem (z.B. 100) mit einen anderen Computersystem (z.B. 200) kommunizieren, so ruft die Anwendung in der CPU des sendeseitigen Computers eine Systemfunktion auf. Anschliessend werden die Daten über den "Internal High Speed Interconnect" (104, 204, ...N04) an die NIC-Karte (Network Interface Card) übertragen. In vielen Implementationen wird anstelle der NIC Karte, ein Chip auf dem Mainboard (der Hauptplatine) des Computers verwendet, welcher logisch dieselben Operationen wie die NIC ausführt Als "Internal High Speed Interconnect" kommt oft PCI (Peripheral Computer Interconnect), ein paralleles Busssystem oder heute PCIe (PCI express), ein serielles hochgeschwindigkeits-Kommunikationssystem zum Einsatz. Typische Bandbreiten von PCI sind 133 MB/s, 266 MB/s, 532 MB/s und 1064 MB/s; bei PCIe gehen die Bandbreiten von 2.5 Gbit/s(∼250 MB/s) bis 80 Gbit/s (∼8000 MB/s). Das NIC transformiert die Daten vom "Internal High Speed Interconnect" in der Regel auf ein serielles Protokoll des "External High Speed Interconnect" (107, 207, ...N07). Als "External High Speed Interconnect" Protokoll werden verschiedene Standards eingesetzt wie z.B. Gigabit Ethernet, Infiniband, Myrinet und andere.

Das "External Interface" (106, 206, ...N06) führt nicht nur die Serialisierung der Daten durch, die Daten werden auch zu Paketen "verpackt" und jedes Paket wird mit Sender- und Empfängeradresse und mit einer Prüfsumme versehen. Im External Interface (108, 208, ...N08) wird das Paket wieder ausgepackt und die Prüfsumme entfernt. Oft werden die Daten wieder parallelisiert um sie dann der "Switching Matrix" zuzuführen. Als "Switching Matrix" kommen alle bekannten Technologien (seriell, parallel oder Kombination von beidem) und Topologien (1-D, 2-D, 3-D Netze; 1-D, 2-D, 3-D Torus, "Fat Tree", Multi-Stage, etc.) zum Einsatz. Der Weg durch die "Switching Matrix" wird dabei durch die Sender bzw. Empfangsdresse der einzelnen Datenpakete bestimmt. Schliesslich wird das Datenpaket im "External Interconnect" (in unserem Beispiel 208) wieder in das "External Interconnect Protokoll" (207) umgewandelt, zum empfangenden Computer (200) übertragen und durch das entsprechende "External Interface" (206) in Empfang genommen. Prüfsumme, Sender- und Empfängeradresse werden entfernt und die Speicheradresse im "Memory" (203) wird berechnet und die Daten werden in den Speicher übertragen. Schliesslich wir der Anwendung, die im Prozessor (201) läuft, signalisiert, dass neue Daten eingetroffen sind. Auf die Mechanismen zur Fehlerbehandlung, Bestimmung der Zugriffsrechte etc. wird hier nicht näher eingegangen, da diese Punkt zum Verständnis der Erfindung nicht von Bedeutung sind.

Bei Betrachtung eines einzelnen Datentransfers fällt auf, dass auf dem Weg vom Sender zum Empfänger viele Protokollumwandlungen notwendig sind. Diese Protokollumwandlungen sind nicht nur komplex (und daher "teuer"), sie verursachen auch eine zusätzliche Übertragungsverzögerung (Latenz) und können zu einer Reduktion der Bandbreite führen. Ausserdem erschwert das Verpacken der Daten und Kommandi in Netzwerkpakete deren Interpretation im Switch und so die Erbringung von weiter gehender Funktionalität im Switch.

Es ist daher Aufgabe der Erfindung, ein Verfahren und ein paralleles Computersystem zur Verfügung zu stellen, welches Nachteile des Standes der Technik überwindet und insbesondere eine Kommunikation zwischen verschiedenen Computern mit einem reduzierten Zeitaufwand und Aufwand an Hardware ermöglicht.

Diese Aufgabe wird durch das Computersystem mit einer Mehrzahl von Computern und einem Switch und durch das Verfahren gelöst, wie sie in den Patenansprüchen definiert sind.

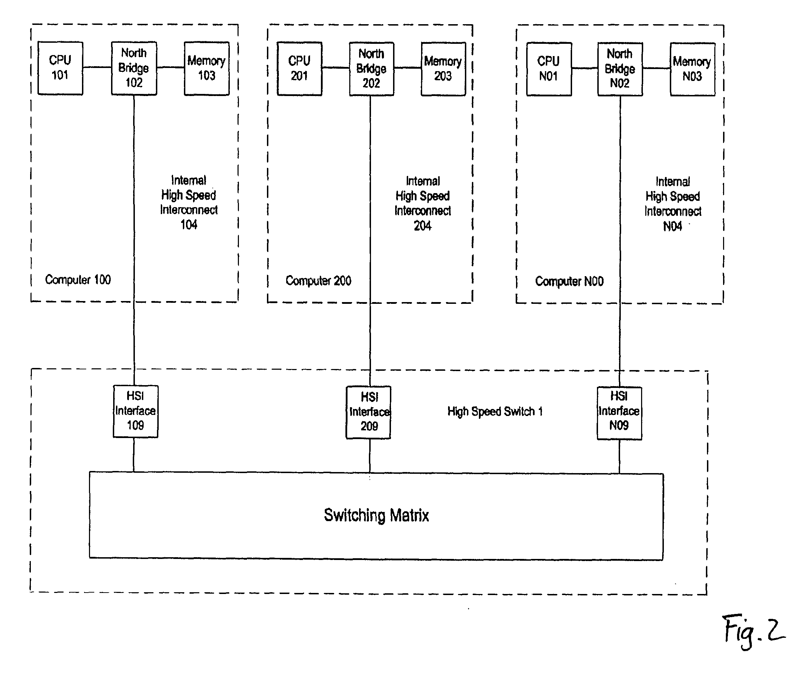

Gemäss einem Aspekt der Erfindung wird der "Internal High Speed Interconnect" (104, 204, ...N04) über die internen Grenzen des Computers hinaus, bis in den "High Speed Switch" (1) hinein verlängert, was in Figur 2 sehr schematisch dargestellt ist. Im High Speed Switch erfolgt im dargestellten Beispiel noch eine einmalige Umwandlung am "High Speed Interconnect Interface" (109, 209, ...N09) um dann bspw. analog zum Stand der Technik die Daten über die "Switching Matrix" zu übertragen.

Die Erfindung bedient sich unter anderem der überraschenden Erkenntnis, dass es möglich ist, "Internal High Speed Interconnect"-Signale auch über Distanzen von bis zu 15 Metern und mehr zu übertragen.

Vorzugsweise kommen als "Internal High Speed Interconnect" serielle Protokolle (wie z.B. PCIexpress) zum Einsatz. In diesen Fällen werden in der Regel differentielle Signale mit sehr hohen Bandbreiten (z.B. 2.5 Gbit/s pro differentielles Signalpaar) eingesetzt.

Durch die vorliegende Erfindung, werden die Protokollumwandlungen eines einzelnen Datentransfers vom Sender zum Empfänger signifikant reduziert. Dadurch erfolgt auch eine Reaktion der Komplexität und damit eine Reduktion von Kosten und Leistungsverbrauch. Schliesslich kann eine geringe Latenz als nach dem Stand der Technik erreicht werden. Insgesamt kann erwartet werden, dass die Latenzzeit um 30-40% gekürzt wird und im Ganzen die Geschwindigkeit des Systems ca. verdoppelt wird, wobei je die Effizienzssteigerung je nach Implementierung und je nach Applikationen auch weniger oder aber bis zu deutlich mehr betragen kann, insbesondere wenn - sofern sich das aufgrund der gewählten Applikation(en) empfiehlt -zusätzlich die nachstehend geschilderten Massnahmen getroffen werden.

Die vorgeschlagene Erfindung ermöglicht nicht nur eine tiefere Latenz bei der Übertragung von Nachrichten, sie erlaubt ausserdem das effizientere Einbinden von verteilten Operationen (wie z.B. "Barrier-Synchronisation", "Locks" oder kollektiven Operationen). Durch die Protokollumwandlung in der Network Interface Card (NIC) und Paketierung gemäss dem Stand der Technik gehen nämlich z.B. Informationen verloren. Dank dem erfindungsgemässen Ansatz (direkte Verwendung der Internal High Speed Interconnect-Signale) ist es jedoch ohne Weiteres möglich, die verteilten Operationen nahtlos in den Switch zu integrieren und so die Leistung für diese Operationen zu verbessern. Auch einfache Operationen wie Additionen oder die Ermittlung von Maxima können durch das erfindungsgemässe Vorgehen ohne vorherige aufwändige Aufbereitung im Switch durchgeführt werden, anstatt dass sie - durch den Flaschenhals der Umwandlung in ein "External High Speed Interconnect"-Protokoll hindurch - an einen Computer delegiert werden müssten. Das bringt für gewisse Anwendungen wie die Datenbankbewirtschaftung gewaltige Performancevorteile.

Auch für Systeme die mit verteiltem Speicher arbeiten, ist die vorgeschlagene Erfindung sehr nützlich, da auch hier eine tiefere Latenz und eine höhere Bandbreite erzielbar sind. Besondere Vorteile ergeben sich, wenn beispielsweise wie vorstehend erwähnt das "Locking" durch den Switch durchgeführt wird, oder wenn in einem alternativen Approach transactional memory im Switch (in der Switching Matrix) gespeichert und/oder verwaltet wird. Das Transactional Memory kann auch durch die Switching Materix auf verschiedene physische Komponenten verteilt werden.

Je nach Ausgestaltung, Ausführungsform und/oder Blickwinkel können eines oder mehrere der folgende Merkmale und Eigenschaften eines Computersystems als charakteristisch für Aspekte der Erfindung angesehen werden: Die Erwägungen beziehen sich jeweils auf ein paralleles Computersystem mit mehreren Computern und (mindestens) einem Switch, wobei jeder Computer einen Zentralprozessor und einen Arbeitsspeicher aufweist:
- Für die Kommunikation zwischen Computer und Switch ist weder eine Netzwerk-Interfacekarte noch ein diese Funktion übernehmender Chip oder Chip-Bestandteil notwendig. Vielmehr reichen die Mittel für die interne, sehr schnelle Kommunikation zwischen Komponenten des Computers aus - der Switch, bzw. eine Schnittstelle des Switches wird quasi als computerinterne Komponente behandelt.
- Für die Übertragung von Daten aus dem Computer hinaus zum Switch wird kein speziell für die Datenübertragung in Computernetzwerken vorgesehenes Protokoll verwendet, d.h. es ist auch keine Protokollumwandlung für die Datenübertragung notwendig.
- Der Switch kommuniziert über das PCIe-Protokoll oder ein an dessen Stelle tretendes, für die Kommunikation mit internen Peripheriegeräten bestimmtes, serielles Protokoll mit den einzelnen Computern. Er ist vorzugsweise direkt (ohne zwischengeschaltete Datenverarbeitung od. Protokollumwandlung) mit einer Komponente des Computers (bspw. Northbridge, Southbridge, oder der CPU selbst) in Kommunikationsverbindung, die Daten (dazu werden hier auch Aufrufe und andere Signale gezählt) von der CPU in eine für computerinterne Peripheriegeräte verständliche Sprache übersetzt.
- Zwischen der CPU und dem funktionellen Eingang des Switches gibt es im Gegensatz zum Stand der Technik höchstens eine Protokollumwandlung: diejenige zwischen dem von der CPU verwendeten (im Allgemeinen proprietären, vom Computertyp abhängigen, bspw. für den front-side bus verwendeten) Protokoll und dem Internal High Speed Interconnect-Protokoll-Format (gegenwärtig bspw. PCIe). Ein Aufruf von einer CPU an eine CPU eines anderen Computers (oder ein Zugriff auf einen entsprechenden Arbeitsspeicher eines anderen Computers) bringt also höchstens vier Protokollumwandlungen mit sich, nämlich CPU- Internal High Speed Interconnect-Protokoll, Internal High Speed Interconnect-Protokoll-Switch, Switch- Internal High Speed Interconnect-Protokoll, und Internal High Speed Interconnect-Protokoll -CPU.

Das Vorgehen gemäss der Erfindung (bzw. gemäss Aspekten der Erfindung) vereint Vorteile von Mehrcomputersystemen gemäss dem Stand der Technik und von Parallelsystemen mit auf die parallele Datenverarbeitung ausgerichteten Spezielkomponenten (inklusive speziellen CPUs): Das erfindungsgemässe Vorgehen erlaubt die Verwendung von auf dem Markt erhältlichen Standard-Computern mit Standards-CPUs und Standard-Mainboard-Architekturen, die Massenprodukte und entsprechend kostengüstig sind. Dabei kann aber die Geschwindigkeit und Effizienz der parallelen Datenverarbeitung von den ungleich teureren Spezialsystemen (deren Prozessoren auch i.A. über parallele Datenleitungen miteinander verbunden sind) mindestens annähernd erreicht werden.

Ein Computersystem gemäss der Erfindung kann physisch auf verschiedene Arten realisiert sein. In einem ersten Beispiel kann jeder der Computer ein Gehäuse aufweisen und als Personal Computer ausgebildet sein, wobei dann das Computersystem aus einer Mehrzahl von - bspw. in einem Raum angeordneten - solchen Computern sowie einem separaten Switch besteht.

Ein zweites Beispiel sieht das Anordnen einer Mehrzahl von ungehäusten Computern in einem oder mehreren "Racks" vor, wobei dann mindestens eines der Racks noch den Switch aufweist. Pro Computer ist bspw. eine einzige Leiterplatte (nämlich das Mainboard) vorhanden.

Natürlich sind auch andere physische Anordnungen von mehreren Computern (bspw. ohne Gehäuse) möglich.

Das erste und das zweite Beispiel sind insbesondere für relativ kleine Cluster von Computern geeignet, im zweiten Beispiel bspw. für 16 oder 32 Computer oder eine andere zwei- oder gar einstellige Zahl. In beiden Beispielen kann die Netzwerktopologie einfach sternförmig sein, d.h. vom Switch geht eine Internal High Speed Interconnect-Datenleitung zu jedem Computer.

Die Erfindung lässt sich auch ohne Weiteres auch auf kompliziertere, hierarchische Topologien anwenden, bei denen Gruppen von Computern mit jeweils einem Block des Switches verbunden sind und diese Blöcke untereinander kommunizieren (natürlich kann optional auch die Topologie der Verbindungen zwischen den Blöcken miteinander hierarchisch gestaltet sein etc., bezüglich der Netzwerktopologie hat die Erfindung sämtliche Möglichkeiten, die auch für den Stand der Technik vorhanden sind). Wenn für die Kommunikation der Blöcke untereinander ein anderes Format als das Internal High Speed Interconnect-Format verwendet wird, können die Blöcke und die zugehörigen Teilcluster von Computern auch in grösseren Entfernungen voneinander angeordnet sein, unter Umständen gar in verschiedenen Gebäuden. Mit hierarchischen Topologien kann die Erfindung ohne Weiteres auch mit hundert oder mehr, oder gar tausend oder mehr Computern realisiert werden.

In allen Beispielen dieses Text können natürlich noch Peripheriegeräte wie Harddiscs oder andere Datenspeicher, DVD-Geräte, etc. und/oder Eingabe/Ausgabegeräte vorhanden sein.

In jedem Beispiel kann jeder der Computer genau einen Zentralprozessor aufweisen, oder es können mindestens einige der Computer auch selbst mehr als einen Zentralprozessor aufweisen. Die Prozessoren können wie erwähnt von einem Typ sein, wie er in Prozessoren für den Massenmarkt verwendet wird. (N.B. auch Arbeitsspeicher kann pro Computer einer oder mehrere vorhanden sein).

Der Switch kann in allen Beispielen ein Switch (bspw. ein Matrix Switch mit einer Switching matrix oder ein anders ausgestalteter Switch) sein, wie er aus dem Stand der Technik bekannt ist. Für den Switch können sämtliche bekannten Technologien eingesetzt werden. Der Switch (bzw. die Switching Matrix) kann in irgend einer bekannten Topologie realisiert sein, bspw. 1-D-, 2-D-, 3-D-, ...-Netz, "Flat Tree", Torus, Multi Stage, K-Ring, Single Chip Switching etc.. Der Switch (bzw. die Switching Matrix) kann wie erwähnt auch in mehreren Blöcken realisiert sein.

Der Switch kann wie in Figur 2 gezeichnet zu den Computern hin High-Speed-Interfaces aufweisen, die auf der einen Seite das Protokoll des High-Speed Interconnect 104, 204, N04 verstehen. Vorzugsweise sind diese Interfaces auch physisch Teile des Switches; (dann kann auch ein Standard-Switch verwendet werden und entsprechend zur Bildung des Interfaces konfiguriert sein), sie können im Prinzip aber auch anderswo angeordnet sein.

Der Switch kann zusätzlich zur eigentlichen Switching-Funktionalität noch weitere Funktionen wahrnehmen und entsprechend ausgestattet sein, beispielsweise für 'distributed memory'-Approaches, Verwaltung virtueller Speicher etc.

Die High-Speed-Interfaces können ausserdem so konfiguriert sein, dass sie eine Transformation von einem lokalen Zugriffsmechanismus für den lokalen Computer auf den globalen Zugriffsmechanismus für den Switch (bzw. die Switching Matrix) transformieren, so dass auch Aufrufe/Zugriffe an Speicher anderer Computer des Systems unabhängig von der spezifischen Speicherverwaltung der einzelnen Computer möglich sind

Der Switch kann Informationen über das Betriebssystem der einzelnen Computer enthalten - zum Beispiel ,Page Tables' und/oder andere - und so einen Betriebssystem-Bypass ermöglichen, der einzelnen Applikationen einen unmittelbaren Zugriff auf Daten anderer Computer ermöglicht. Solches wäre mit einem Mehrcomputersystem gemäss dem Stand der Technik nur sehr schwierig zu realisieren, da alle Daten ins External High Speed Interconnect umprotokolliert und über dieses übertragen werden müssen.

Weiter Möglichkeiten im Zusammenhang mit dem erfindungsgemässen Ansatz ergeben sich daraus, dass der Switch Daten Speichern und/oder selbst Operationen von Applikationen empfangen und ausführen kann. Der Switch kann bspw. den Applikationen auf den Computern nach bestimmten Regeln (Schreiben, Lesen, etc.) Zugriff auf gespeicherte Daten gewähren, was sehr schnell und effizient geschehen kann. Auch das Durchführen von bestimmten Operationen wie bspw. der "Max"-Operation der einer Summe geschieht u.U. schneller im Switch als wenn es in einem anderen Computer durchgeführt werden müsste. Besonders vorteilhaft ist die Kombination der Funktionalitäten "Daten speichern im Switch" und "Durchführen von Operationen im Switch". Im Zusammenhang mit "Distributed Memory"-Ansätzen ist besonders interessant, wenn Locking-Mechanismen und Barrier-Mechanismen im Switch ausgeführt werden können.

Gewisse Ansätze für die parallele Datenverarbeitung sehen eine "Transactional Memory" vor. Wenn ein solcher Ansatz verwendet wird, kann bspw. die "Transactional Memory" im Switch verwaltet und/oder gespeichert werden. Auch das bringt Effizienzgewinne und wäre bei Mehrcomputersystemen gemäss dem Stand der Technik nur mit sehr grossem Aufwand realisierbar. Die Transactional Memory kann durch den Switch bspw. auch auf verschiedene physische Komponenten verteilt werden.

Zusammengefasst betrifft die Erfindung Mehrcomputersysteme mit mehreren Computern, wobei jeder Computer eine CPU, einen Speicher, beispielsweise eine "North Bridge" und einen Internal High Speed Interconnect aufweist, wobei der Internal High Speed Interconnect direkt zum High Speed Switch geht. Anstatt über eine North-Bridge, kann - je nach Computerarchitektur der verwendeten Computer - der Internal High Speed Interconnect auch direkt, oder aber über eine North-Bridge und eine South-Bridge an die CPU angeschlossen sein.

Der Internal High Speed Interconnect dient also direkt als externe Verbindung zum High Speed Switch.

Der High Speed Switch kann für jede Internal High Speed Interconnect ein High Speed Interface besitzen. Ein solches kann auf der einen Seite das Protokoll des Internal High Speed Interconnect, auf der anderen Seite das Protokoll der Switching Matrix verstehen.

Für die Switching Matrix des High Speed Switches können sämtliche bekannte Technologien eingesetzt werden. Die Switching Matrix kann bspw. in bekannten Topologien realisiert werde (1-D, 2-D, 3-D, ... Netze, "Fat Tree", Torus, Multi Stage, K-Ring, Single Chip Switching, etc.).

Gemäss einer speziellen, für grosse Systeme geeigneten Ausführungsform kann die Switching Matrix mit mehreren Blöcken realisiert werden. Die einzelnen Blöcke können dann mit derselben Technologie, wie im Internal High Speed Interconnect verwendet, miteinander verbunden sein, oder sie können auch mit einer anderen Technologie miteinander verbunden sein.

Die "High Speed Interconnect Interfaces" können ausserdem so eingerichtet sein, dass sie eine Transformation von einem lokalen Zugriffsmechanismus für den lokalen Computer auf den globalen Zugriffsmechanismus für die Switching Matrix transformieren.

Die Switching Matrix kann bspw. Informationen des Betriebssystems der einzelnen Computer enthalten und durch das OS-Bypass direkt auf die Daten der Applikationen der Computer zugreifen.

Gemäss einer weiteren vorteilhaften Ausgestaltung kann die Switching Matrix Daten speichern, auf welche sie den Applikationen auf den Computern nach bestimmten Regel Zugriff (Schreiben, Lesen, etc.) gewährt.

Die Switching Matrix kann bspw. von den Applikationen Operationen empfangen und ausführen.

Es können bspw. Locking-Mechanismen und/oder Barrier-Mechanismen in der Switching Matrix ausgeführt werden.

Es kann ausserdem vorgesehen sein, dass Transactional Memory in der Switching Matrix gespeichert und/oder verwaltet wird. Das Transactional Memory kann auch durch die Switching Matrix auf verschiedene physische Komponenten verteilt werden.

## Patentansprüche

1. Paralleles Computersystem, aufweisend mehrere Computer (100, 200, ..., N00) und einen Switch (1), wobei jeder Computer einen Zentralprozessor (CPU; 101, 201, ..., N01) und einen Arbeitsspeicher (103, 203, ... N03) aufweist, und wobei Komponenten jedes Computers über einen Internal High Speed Interconnect (104, 204, ... N04) kommunizieren, **dadurch gekennzeichnet, dass** der Internal High Speed Interconnect (104, 204, ... N04) als direkte Kommunikationsverbindung, ohne zwischengeschaltete Protokollumwandlung, an den Switch (1) angeschlossen ist.

2. Computersystem nach Anspruch 1, **dadurch gekennzeichnet, dass** mindestens einige der Computer zusätzlich einen Northbridge-Chip (102, 202, ... N02) zur Durchführung des Datentransfers zwischen dem Zentralprozessor (CPU; 101, 201, ..., N01) und dem Arbeitsspeicher (103, 203, ... N03) und/oder einen Southbridge-Chip zur Durchführung des Datentransfers zu Peripheriegeräten aufweisen und dass die Kommunikationsverbindung über den Internal High Speed Interconnect (104, 204, ... N04) zwischen dem Northbridge-Chip oder dem Southbridge-Chip einerseits und dem Switch (1) andererseits besteht.

3. Computersystem nach Anspruch 1, **dadurch gekennzeichnet, dass** die Kommunikationsverbindung über den Internal High Speed Interconnect (104, 204, ... N04) zwischen dem Zentralprozessor (CPU; 101, 201, ..., N01) und dem Switch (1) besteht.

4. Computersystem nach einem der vorangehenden Ansprüche, **dadurch gekennzeichnet, dass** als das Internal High Speed Interconnect (104, 204, ... N04) ein serielles Kommunikationssystem, beispielsweise das Peripheral Computer Interconnect express (PCIe)-Kommunikationssystem zum Einsatz kommt.

5. Computersystem nach einem der vorangehenden Computer, **dadurch gekennzeichnet, dass** der Switch (1) für jedes Internal High Speed Interconnect (104, 204, ... N04) eine High-Speed-Schnittstelle (109, 209, ...N09) besitzt, die zu einer Protokollumwandlung in ein für den Switch (1) verwendbares Protokoll befähigt ist.

6. Computersystem nach Anspruch 5, **dadurch gekennzeichnet, dass** die High-Speed-Schnittstelle (109, 209, ...N09) Mittel besitzt, eine Transformation von einem lokalen Zugriffsmechanismus für einen lokalen Computer (100, 200, ... N00) in einen globalen Zugriffsmechanismus zu transformieren.

7. Computersystem nach einem der vorangehenden Ansprüche, **dadurch gekennzeichnet, dass** der Switch (1) mehrere Blöcke aufweist, von denen jeder mit mehreren Computern verbunden ist, wobei die Blöcke miteinander in Kommunikationsverbindung stehen, und wobei die Kommunikationsverbindung zwischen den Blöcken beispielsweise über dasselbe Kommunikationssystem erfolgt wie für den Internal High Speed Interconnect (104, 204, ... N04).

8. Computersystem nach einem der vorangehenden Ansprüche, **dadurch gekennzeichnet, dass** der Switch (1) Informationen von Betriebssystemen der einzelnen Computer (100, 200, ..., N00) enthält und dadurch direkt auf Daten der Applikationen der Computer zugreifen kann.

9. Computersystem nach einem der vorangehenden Ansprüche, **dadurch gekennzeichnet, dass** im Switch (1) Daten abgespeichert sind, auf welche der Switch Applikationen auf den Computern (100, 200, ..., N00) nach bestimmten Regel Zugriff gewährt.

10. Computersystem nach einem der vorangehenden Ansprüche, **dadurch gekennzeichnet, dass** der Switch von Applikationen auf den Computern (100, 200, ..., N00) Anweisungen empfangen und ausführen kann.

11. Computersystem nach einem der vorangehenden Ansprüche, **dadurch gekennzeichnet, dass** Locking-Mechanismen und Barrier-Mechanismen in der Switching Matrix ausgeführbar sind.

12. Computersystem nach einem der vorangehenden Ansprüche, **dadurch gekennzeichnet, dass** Transactional Memory im Switch gespeichert und/oder verwaltet wird, wobei das Transactional Memory beispielsweise durch die Switching Matrix auf verschiedene physische Komponenten verteilt wird..

13. Computersystem nach einem der vorangehenden Ansprüche, **dadurch gekennzeichnet, dass** im Switch, Operationen auf Daten durchführbar sind, beispielsweise die Bestimmung von Maxima, Minima, Z-Puffer, oder andere.

14. Verfahren zur Kommunikation in einem parallelen Computersystem mit mehreren Computern (100, 200, ..., N00) und einem Switch (1), wobei von einem Computer an einen anderen Computer zu übertragende Daten in einem computerinternen Format zur Verfügung gestellt werden, das zur computerinternen Übertragung von Daten zwischen Komponenten des Computers dient, und wobei die Daten in diesem Format an den Switch übertragen werden und vom Switch in diesem Format an den anderen Computer übertragen werden.

15. Verfahren nach Anspruch 14, **dadurch gekennzeichnet, dass** die Daten am Eingang des Switches in ein vom computerinternen Format verschiedenes Format umgewandelt werden und am Ausgang des Switches wieder in das computerinterne Format zurückgewandelt werden.
